(19) Europäisches Patentamt
European Patent Office
Office européen des brevets

(11) **EP 2 637 069 A1**

(12) **DEMANDE DE BREVET EUROPEEN**

(43) Date de publication:
**11.09.2013 Bulletin 2013/37**

(51) Int Cl.:
**G05B 19/4065** (2006.01)

(21) Numéro de dépôt: **13305162.3**

(22) Date de dépôt: **11.02.2013**

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br>Etats d'extension désignés:<br>**BA ME** | (72) Inventeurs:<br>• **Cercueil, Michel**<br>  **38050 Grenoble Cedex 09 (FR)**<br>• **Houdray, Marc**<br>  **38050 Grenoble Cedex 09 (FR)** |
| (30) Priorité: **05.03.2012  FR 1200653** | (74) Mandataire: **Tripodi, Paul**<br>**Schneider Electric Industries SAS**<br>**Service Propriété Industrielle**<br>**World Trade Center / 38EE1**<br>**5 Place Robert Schuman**<br>**38050 Grenoble Cedex 09 (FR)** |
| (71) Demandeur: **Schneider Electric Industries SAS**<br>**92500 Rueil-Malmaison (FR)** | |

(54) **Procédé et dispositif de contrôle du vieillissement d'appareils électriques**

(57)     Le Procédé de contrôle de vieillissement d'au moins un appareil électrique comporte :
- l'entrée et la mémorisation (202) de données de calcul de vieillissement par type d'appareil,
- la mesure (203) de grandeurs physiques représentatives de conditions environnementales,
- le calcul (204) de vieillissement en fonction desdites mesures et des données de calcul de vieillissement mémorisées, et
- la communication (204) et/ou la signalisation de d'informations de vieillissement d'appareils électriques.

Le calcul de vieillissement concerne notamment la partie mécanique et/ou de l'usure de contact électriques d'un appareil, la partie électronique dudit appareil, et/ou un actionneur électromagnétique dudit appareil électrique.

Le dispositif et l'installation comportent des moyens pour mettre en oeuvre le procédé de contrôle de vieillissement d'au moins un appareil électrique.

FIG. 1

EP 2 637 069 A1

**Description**

**DOMAINE TECHNIQUE**

L'invention concerne un procédé de contrôle de vieillissement d'au moins un appareil électrique.

L'invention concerne un dispositif de contrôle de vieillissement d'au moins un appareil électrique comportant des moyens de traitement et des moyens de communication destinés à être connectés à au moins un appareil électrique.

L'invention concerne aussi une installation électrique comportant un contrôle de vieillissement d'au moins appareils électriques comportant des moyens de traitement et des moyens de communication destinés à être connectés audit appareil électrique.

**ETAT DE LA TECHNIQUE**

Il est connu d'effectuer des calculs de durée de vie ou de temps moyens entre deux pannes pour des appareils électroniques, électriques ou mécaniques. Ces calculs sont réalisés selon des règles et des tableaux dépendant de la complexité des systèmes et leurs conditions de d'utilisation. Généralement, lors des calculs, les conditions de fonctionnement sont stables ou continues et ne tiennent pas compte des variations imprévisibles qui peuvent arriver durant la vie des produits.

Dans ces conditions, le vieillissement est supposé linaire et dépend du temps restant par rapport à la durée de vie initialement calculée. Cependant, pour maintenir correctement une installation, il est parfois nécessaire de prédire le vieillissement de manière plus précise et plus réaliste. Les dispositifs de l'état de la technique ne permettent pas un tel contrôle du vieillissement des appareils électriques.

**EXPOSE DE L'INVENTION**

L'invention a pour but un procédé et un dispositif de contrôle de vieillissement d'appareil électrique permettant une évaluation plus précise de l'état des appareils, et une installation mettant en oeuvre ce procédé.

Selon l'invention, un procédé de contrôle de vieillissement d'au moins un appareil électrique comporte :

- l'entrée et la mémorisation de données de calcul de vieillissement par type d'appareil,
- la mesure de grandeurs physiques représentatives de conditions environnementales,
- le calcul de vieillissement en fonction desdites mesures et des données de calcul de vieillissement mémorisées, et
- la communication et/ou la signalisation d'informations de vieillissement d'appareils électriques.

Avantageusement, le procédé de contrôle comporte des conditions fonctionnelles comprenant :

- le comptage de manoeuvres dudit appareil électriques,
- la mesure de conditions de manoeuvres dudit appareil électriques, et
- l'enregistrement de données représentatives de manoeuvres associées à des valeurs de courant coupé.

De préférence, la mesure de grandeurs physiques représentatives de conditions environnementales comprend :

- la mesure et la mémorisation de température par un capteur proche desdits appareils électriques,
- la mesure et la mémorisation de taux d'humidité,
- la mesure et la mémorisation de taux de salinité, et/ou
- la mesure et la mémorisation d'amplitude et de fréquence de vibrations,

De préférence, le calcul de vieillissement comprend :

- le calcul de vieillissement de la partie mécanique et/ou de l'usure de contacts électriques dudit appareil,
- le calcul de vieillissement de la partie électronique dudit appareil, et/ou
- le calcul de vieillissement d'un actionneur électromagnétique dudit appareil électrique.

Avantageusement, le procédé de contrôle comprend la détermination de facteurs accélération de vieillissement.

De préférence, le procédé de contrôle comprend la sélection d'un facteur accélération de vieillissement maximal parmi plusieurs facteurs accélération de vieillissement.

Avantageusement, le procédé de contrôle comporte la modification d'une valeur du facteur d'accélération de vieillissement dû à la température à partir d'un seuil de température.

Avantageusement, le procédé de contrôle comporte la combinaison d'un facteur d'accélération de vieillissement dû à la température avec des facteurs accélération de vieillissement représentatifs d'une température ambiante, d'une charge électrique, d'effets de courants harmoniques et/ou d'un indice de protection dudit appareil électrique.

Selon l'invention, dans un dispositif de contrôle de vieillissement d'au moins un appareil électrique comportant des moyens de traitement et des moyens de communication destinés à être connectés à au moins un appareil électrique, les moyens de traitement comportent des moyens pour mettre en oeuvre un procédé tel que défini ci-dessus.

De préférence, lesdits moyens de traitement comportent :

- des moyens de stockage de caractéristiques de calcul de vieillissement d'appareils électriques,
- des entrées de mesure destinées à être connectées à des capteurs de mesure de grandeurs physiques environnementales,
- des moyens d'indication de vieillissement d'appareils électriques, et
- des moyens de communication.

Avantageusement, le dispositif de contrôle comporte des capteurs de mesure de grandeurs physiques environnementales connectés auxdits moyens de traitement.

De préférence, des capteurs de mesure de grandeurs physiques environnementales comprennent :

- un capteur de température situé dans un espace proche desdits appareils électriques,
- un capteur de taux d'humidité,
- un capteur de taux de salinité, et/ou
- un capteur d'amplitude et de fréquence de vibrations.

Dans une installation électrique selon l'invention comportant un contrôle de vieillissement d'au moins un appareil électrique comportant des moyens de traitement et des moyens de communication destinés à être connectés à un appareil électrique, les moyens de traitement comportent des moyens pour mettre en oeuvre un procédé tel que défini ci-dessus.

Avantageusement, l'installation électrique comportant des appareils électriques, comporte au moins un dispositif tel que défini ci-dessus connecté par des moyens de communication auxdits appareils électriques pour recevoir des données de fonctionnement.

**BREVE DESCRIPTION DES DESSINS**

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- la figure 1 représente un schéma d'un dispositif de contrôle de vieillissement d'appareil électrique selon un mode de réalisation de l'invention ;
- la figure 2 représente un schéma d'une installation électrique comportant un contrôle de vieillissement d'appareils électriques selon un mode de réalisation l'invention ;
- les figures 3 à 5 représentent des installations selon des variantes de modes de réalisation de l'invention ;
- la figure 6 représente un schéma d'un d'appareil électrique destiné à être utilisé avec un dispositif de contrôle de vieillissement selon un mode de réalisation de l'invention ;
- la figure 7 représente un schéma de présentation des données d'appareils électrique montrant des informations de vieillissement,
- la figure 8 représente un organigramme d'un procédé de contrôle du vieillissement d'appareils électriques selon un mode de réalisation de l'invention.

**DESCRIPTION DETAILLEE DE MODES DE REALISATION PREFERES**

Dans des modes de réalisation de l'invention, le calcul du vieillissant concerne notamment des unités de commande ou des déclencheurs électroniques ou magnétothermiques, des disjoncteurs ou des contacteurs dans leur globalité avec des contacts de puissance et leur mécanisme, et des bobines d'actionnement notamment à manque de tension ou à maximum de tension.

Par exemple, dans un disjoncteur, le vieillissement est dû notamment à des conditions environnementales telles que la température ou des vibrations, ou des opérations d'exploitations telles que les ouvertures ou les fermetures des contacts de puissance.

La durée de vie est représentative d'un temps moyen entre la fabrication et une défaillance avec des conditions de fonctionnement données alors que le vieillissement concerne le pourcentage d'espérance de vie d'un dispositif ou d'un appareil déjà passé depuis un certain temps et l'action de réduire ce pourcentage.

Ainsi, la durée de vie des dispositifs est sous l'influence des facteurs suivants : le nombre d'opérations avec les conditions de chaque opération tel que les courants interrompus, la température d'exploitation, la présence d'atmosphère corrosive telle que l'humidité, l'atmosphère salée, la présence de gaz corrosif (SO2, H2S, C12, NH3 Et NON2), la présence de poussière, et/ou la présence de vibrations.

Ces facteurs peuvent être mesurés par des capteurs, évalués par un des mesures directes ou indirectes ou donnés par l'utilisateur à travers une interface homme-machine, par exemple, sur le lieu de l'installation.

Le calcul du vieillissement se fera de préférence par zones, par exemple par la formule 1.

$$\%Ag = \%Ag_0 + \sum_i \frac{\Delta t_i}{(TF)_i}$$
$$= \%Ag_0 + \frac{1}{TF_0} \cdot \sum_i \Delta t_i \cdot A_i \tag{1}$$

Dans laquelle :

$\%Ag_0$: vieillissement au temps $t_0$,

$\Delta t$ : temps passé dans la zone de conditions de fonctionnement depuis to,

(TF) : durée de fonctionnement estimée avant défaillance calculée avec les conditions de fonctionnement de ladite zone,

$TF_0$ : durée de fonctionnement avant défaillance dans des conditions nominales. Cette valeur sera définie par référence d'appareil électrique dans des bases de données.

$A_i$: facteur d'accélération pour les conditions de fonctionnement de ladite zone.

Les facteurs d'accélérations sont des paramètres locaux permettant de modifier le taux de vieillissement initialement prévu.

Ainsi, en considérant que des conditions restent constantes, nous pouvons calculer une durée de vie restante par la formule 2.

$$RLT = T_F \cdot (1 - \%Ag)$$
$$= \frac{TF_0}{A_{RLT}} \cdot (1 - \%Ag) \tag{2}$$

Dans laquelle :

RLT : attente de durée de vie restante,

$T_F$: durée de fonctionnement avant défaillance calculée avec conditions de fonctionnement actuelles,

$A_{RLT}$: Facteur d'accélération calculé pour les conditions de fonctionnement actuelles.

Le pourcentage de vieillissement représente un état actuel du dispositif ou de l'appareil. Au contraire, la durée de vie restante est un pronostic sur l'état du dispositif ou de l'appareil, en considérant les conditions de fonctionnement constantes. Ainsi, la durée de vie restante ne devrait pas être interprétée comme une date de défaillance.

Pour chaque facteur de vieillissement, l'utilisateur spécifie une période de référence. Le facteur d'accélération actuel sera alors le facteur d'accélération instantané moyen pendant une période passée. Pour le calcul d'un facteur d'accélération de vieillissement $A_{RLT}$: pendant une période passée $\tau_{RLT}$, la formule 3 peut être utilisée.

$$A_{RLT}(t) = \frac{1}{\tau_{RLT}} \cdot \sum_i A_i \cdot \Delta t_i \qquad (3)$$

$\Delta t_i$ est le temps passé dans la zone de conditions de fonctionnement pendant la période de temps passé $\tau_{RLT}$.
Lorsque plusieurs facteurs de vieillissement indépendants arrivent simultanément, le vieillissement résultant est le maximum du vieillissement calculé pour chaque facteur.

$$\%Ag = \max[\%Ag(Temperature), \%Ag(corrosion), \%Ag(operations), ...] \qquad (4)$$

$$RLT = \min[T_F \cdot (1 - \%Ag(Temperature)), T_F \cdot (1 - \%Ag(corrosion)), ...] \qquad (5)$$

Pour un déclencheur électronique une température jusqu'à 85°C a peu d'effet. Au-delà un facteur d'accélération est appliqué pour le calcul de l'estimation d'un vieillissement prématuré. La présence de cycles thermiques peut aussi donner lieu à l'utilisation de facteurs d'accélération supplémentaires.
Les circuits électroniques sont aussi sujets à un vieillissement pour cause de corrosion résultant de trois facteurs principaux tels que humidité, gaz corrosif (SO2, H2S, C12, NH3 Et NON2) et atmosphère salée. Ces trois facteurs ne sont pas complètement indépendants puisque l'humidité augmente l'effet d'atmosphère gazeuse et salée corrosive. Nous utiliserons par exemple la formule suivante :

$$A_C = 1 + (A_H - 1) + [\max(A_{CG}, A_{SA}) - 1] \qquad (6)$$

$A_C$ : facteur d'accélération pour vieillissement du à de la corrosion,
$A_H$ : facteur d'accélération pour vieillissement du à l'humidité,
$A_{GC}$ : facteur d'accélération pour vieillissement du à du gaz corrosif,
$A_{SA}$ : facteur d'accélération pour vieillissement du à de l'atmosphère salée.

Pour l'évaluation de la durée de vie de disjoncteur en considérant des facteurs de vieillissement environnementaux, nous utiliserons, par exemple, la formule suivante :

$$A = \max[\max(A_{SA}, A_{CG}) \times A_H, A_D, A_V] \times A_T \qquad (7)$$

$A_{SA}$ : Facteur d'accélération pour vieillissement du à de l'atmosphère salé.
$A_{GC}$ : Facteur d'accélération pour vieillissement du à du gaz corrosif.
$A_H$ : Facteur d'accélération pour vieillissement du à l'humidité.
$A_D$ : Facteur d'accélération pour vieillissement du à de la poussière.
$A_V$ : Facteur d'accélération pour vieillissement du à des vibrations.
$A_T$ : Facteur d'accélération pour vieillissement du à la température.

Le facteur d'accélération de température est évalué par une combinaison de la température ambiante, de la charge, des effets harmoniques et du niveau d'étanchéité de l'appareil. Tel que :

$$A_T = A_{AT} \cdot A_{Ha} \cdot A_{IP} \cdot A_{load} \qquad (8)$$

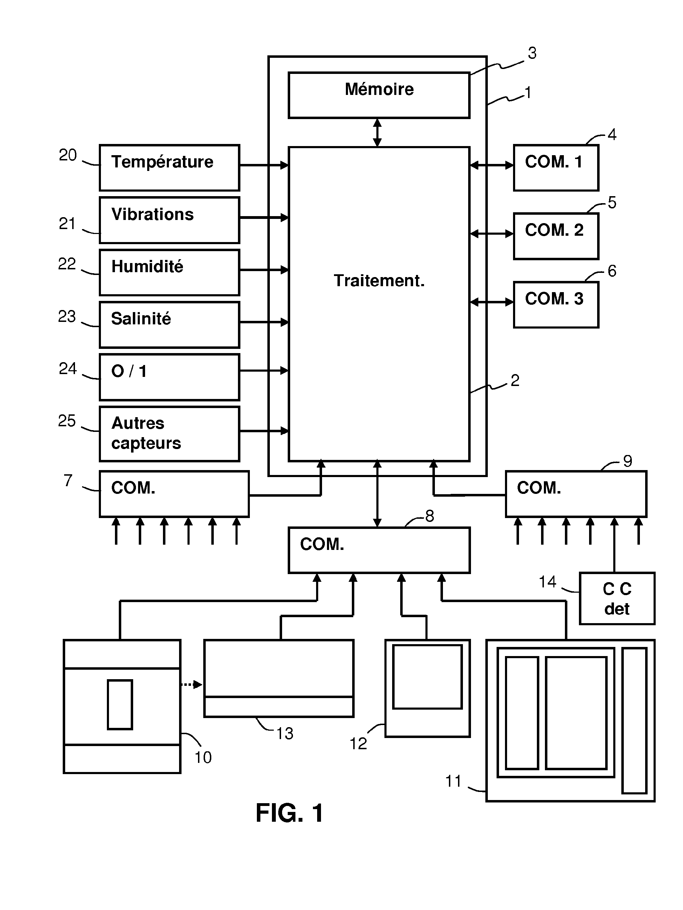

Le dispositif de contrôle de vieillissement d'appareil électrique selon un mode de réalisation de l'invention représenté sur la figure 1, comporte un module de traitement 1 représentés par un boîtier 1 comportant un circuit de traitement 2 effectuant des calculs et la gestion de communications ainsi que la réception et l'émission de données. Le module 1 comprend aussi un module 3 de stockage de caractéristiques de calcul de vieillissement d'appareils électriques et des données représentatives desdits d'appareils électriques. Le module 3 de stockage mémorise aussi le schéma de l'installation électrique avec les connexions des appareils et leur type. Ces données peuvent être partagées, échangées ou dupliquées avec un superviseur ou d'autres modules de stockage. Pour communiquer avec d'autres dispositifs ou un superviseur, le module de traitement comporte au moins un circuit de communication 4 par voie filaire, et/ou un circuit de communication 5 sans fil, et/ou un circuit de communication 6 par réseau téléphonique cellulaire.

La visualisation sur un superviseur peut être représentée par un schéma filaire global ou partiel de l'installation montrant les états de chaque appareil ainsi que les références, les caractéristiques et les réglages. La signalisation peut être faite aussi sur des ordinateurs portables, des tablettes or des téléphones portables en liaisons sans fil ou par réseau de téléphonies cellulaire.

Un dispositif de contrôle selon un mode de réalisation de l'invention comporte un réseau de communication d'informations entre les appareils électriques et les moyens de traitement pour communiquer les informations. Le réseau de communication peut comporter les modules concentrateurs de communication 7, 8, 9 pour réduire le nombre d'entrées de communication du module de traitement. Les concentrateurs sont connectés à plusieurs appareils électriques 10, 11, 12, 13, 14 pour communiquer entre autres des informations de conditions de fonctionnement et de type et de références d'appareils au module de traitement 2 en regroupant les messages sur un canal de communication.

Les appareils électriques sont notamment des disjoncteurs 10, 11, avec par exemple, des déclencheurs électroniques ou des relais de protection. Les appareils peuvent être aussi des modules ou des relais 12 différentiels, de détection de fuite à la terre, des modules de mesure de puissance 13 associés de préférence à des appareils de coupures tels que des disjoncteurs ou des contacteurs. De même, des détecteurs de courts-circuits 14 peuvent donner des informations d'état d'une ligne électrique ou d'une charge pour éviter la fermeture d'un appareil ou localiser un défaut électrique de courts-circuits.

Le dispositif de contrôle de vieillissement d'appareils électriques de la figure 1 comporte des entrées de mesure destinées à être connectées à des capteurs de mesure de grandeurs physiques environnementales. Il communique et signale en local ou a distance des indications de vieillissement des appareils électriques. Ainsi, des capteurs de mesure de grandeurs physiques environnementales sont connectés au module de traitement 1.

Les capteurs de mesure de grandeurs physiques environnementales comprennent notamment :

- un capteur 20 de température situé de préférence dans un espace proche des appareils électriques concernés par un calcul de vieillissement,
- un capteur 21 d'amplitude et de fréquence de vibrations,
- un capteur 22 de taux d'humidité, et/ou
- un 23 capteur de taux de salinité.

Un capteur 24 d'entrée binaire tout ou rien peut aussi être connecté au module 1 pour le calcul de vieillissement. Dans ce cas, il peut par exemple compter le nombre de manoeuvres d'un appareil électrique. D'autres capteurs 25 peuvent aussi être connectés au module 1 pour la détermination d'un taux de vieillissement.

Les capteurs 20 à 25 peuvent être des capteurs permanents ou des capteurs installés seulement lors des mesures. De plus, certaines données telles que le taux de salinité ou de poussière peuvent être déterminées préalablement et entrées directement par saisies.

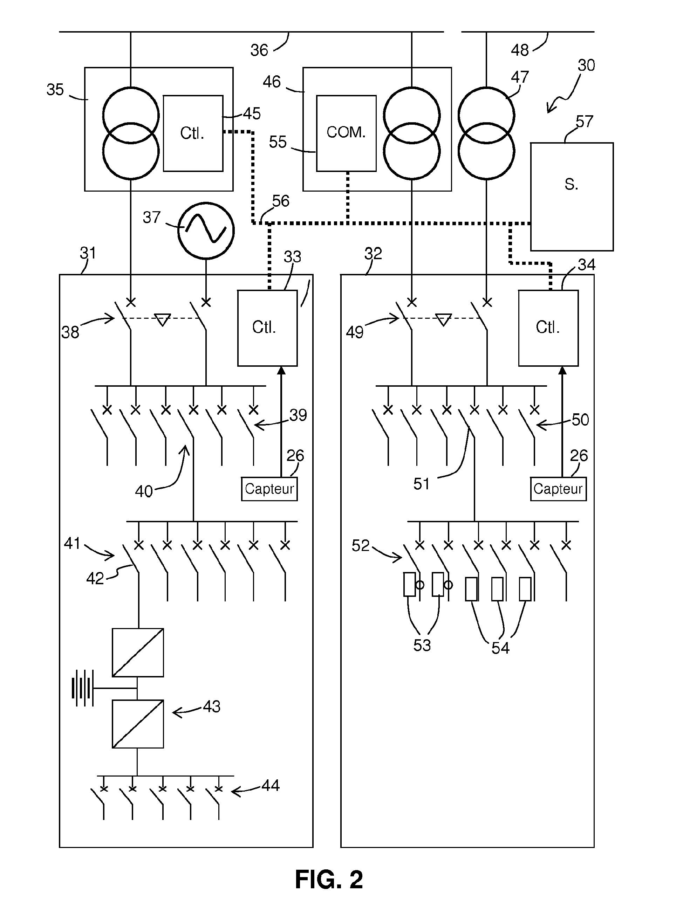

La figure 2 représente un schéma d'une installation électrique 30 comportant un contrôle de vieillissement d'appareils électriques selon un mode de réalisation l'invention 1. Sur cette figure, l'installation comporte 2 armoires, cellules ou tableaux électriques 31, 32 comportant chacune un dispositif de contrôle de vieillissement respectivement 33 et 34.

L'armoire 31 est alimentée d'une part par un poste de transformation 35 connecté en amont à un réseau électrique moyenne tension 36 et d'autre part par un générateur autonome 37. Ces deux alimentations basses tensions arrivent sur un inverseur de source 38 composé de deux disjoncteurs télécommandés et verrouillés mécaniquement. En aval de l'inverseur, l'alimentation est fournie à un premier groupe 39 de disjoncteurs. Puis, un disjoncteur 40 du groupe 39 alimente un second groupe 41. Un disjoncteur 42 du second groupe alimente en aval un dispositif de conversion et de stockage d'énergie électrique 43, puis un troisième groupe de 44 de disjoncteurs. Le poste de transformation 35 peut comporter également des disjoncteurs ou des sectionneurs en amont sur la moyenne tension et sur le coté basse tension. Dans chaque armoire, des capteurs 26 de mesure de grandeurs physiques environnementales peuvent être communs pour le calcul du vieillissement de plusieurs appareils. Le calcul de vieillissement est centralisé dans un dispositif 33 pour l'armoire 31 ou remonté dans un superviseur. Chaque armoire est alors une zone climatique de calcul du vieillissement des appareils électriques qui y sont installés. Chaque appareil électrique comportant un dispositif de communication envoie des informations de conditions de fonctionnement au dispositif de calcul de 33. Pour les autres un calcul de vieillissement peut être aussi réalisé en fonction de valeurs de conditions climatiques et de données préalablement mises en mémoire.

L'armoire 32 est alimentée d'une part par un poste de transformation 46 connecté en amont à un réseau électrique moyenne tension 36 et d'autre part par un transformateur 47 à un second réseau électrique moyenne tension 48. En aval du poste 46 et du transformateur 47, deux alimentations basses tensions arrivent sur un inverseur de source 49 composés de deux disjoncteurs télécommandés et verrouillés mécaniquement. En aval de l'inverseur, l'alimentation est fournie à un premier groupe 50 de disjoncteurs. Puis, un disjoncteur 51 du groupe 50 alimente un second groupe 52 de disjoncteurs. Les appareils comportant un dispositif de communication envoient des données de conditions de fonctionnement au dispositif 34. Des détecteurs de courts-circuits 54 disposés sur des départs permettent de localiser des défauts de ligne ou de charge et éventuellement de fournir des informations de contraintes pour le calcul de vieillissement.

Un dispositif de communication 55 disposé dans le poste de transformation 46 peut aussi envoyer au dispositif de contrôle 34 des données servant au calcul de vieillissement.

Les dispositifs de contrôles utilisés pour le contrôle des états, des réglages et caractéristiques, et pour le contrôle de vieillissement sont connectés entre eux par un réseau de communication 56 et à un superviseur 57.

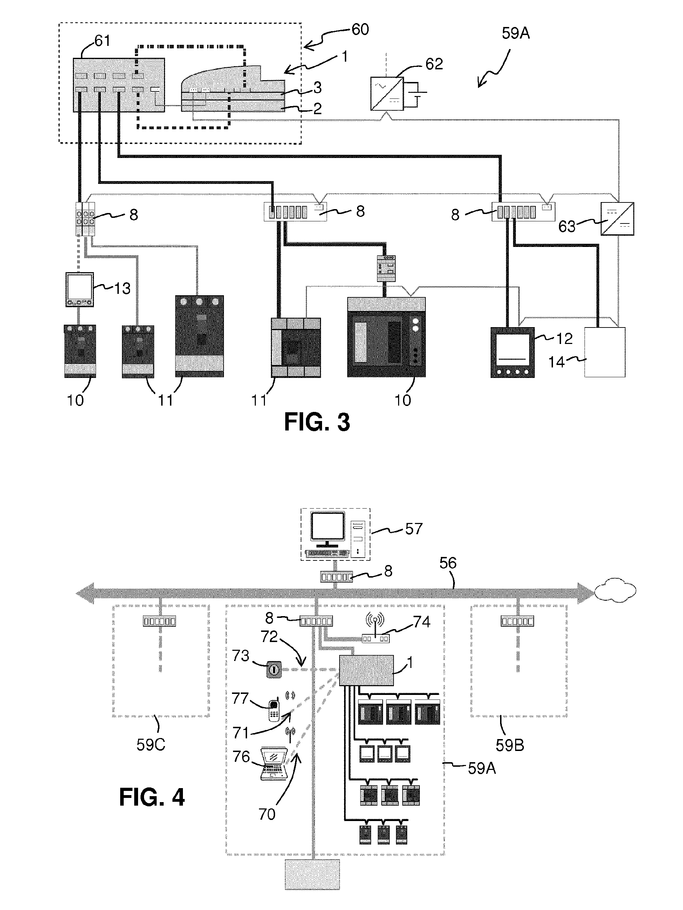

La figure 3 montre un autre schéma d'une partie d'installation 59 avec un dispositif de contrôle de vieillissement d'appareils électriques ayant dans un boitier 60 de traitement du calcul de vieillissement comprenant un module de traitement 1 et un module 61 de gestion des circuits de communication et des entrée-sorties de divers capteurs. Le circuit 61 est connecté à des concentrateurs de communication 8 recevant des informations depuis des appareils électriques 10 à 14. Les concentrateurs et les circuits de communication des appareils sont, par exemple, alimentés par les circuits d'alimentation comprenant des convertisseurs 63 et 64 ainsi que des lignes 64 et 65.

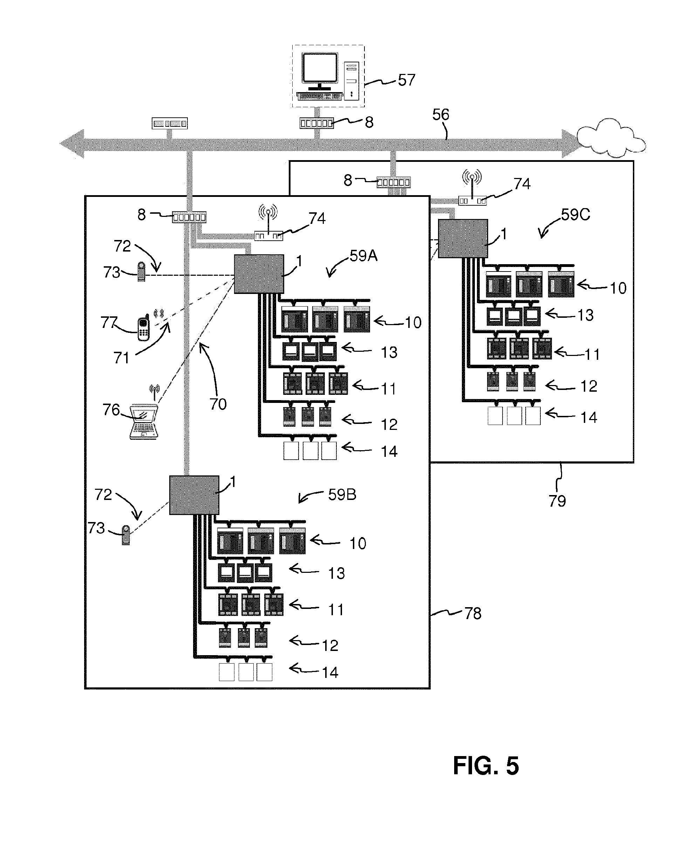

Les figures 4 et 5 représentent des installations selon des variantes de modes de réalisation de l'invention. Sur la figure 4, des parties d'installation 59A, 59B, 59C sont connectées à un réseau de communication 56 connecté à un superviseur 57. Ainsi, le contrôle de vieillissement d'appareils électriques est global est peut être surveillé par un opérateur central ou distant. Pour assurer une sécurité et une robustesse de la surveillance du vieillissement d'appareils électriques, le calcul peut être fait dans chaque dispositif de contrôle de vieillissement. De plus, les données de schéma, de réglage et de calcul du vieillissement sont de préférence échangées, comparées et consolidées dans chaque module de mémorisation des dispositifs de contrôle.

La partie d'installation 59A comporte une liaison de communication sans fil 70, une liaison de communication de téléphone cellulaire 71, et une liaison de communication radio 72 pour communiquer avec le module 60 de traitement du vieillissement. La liaison 72 est par exemple utilisée par un boitier 73 de commande d'ouverture ou de fermeture d'un appareil électrique tel qu'un disjoncteur télécommandé, un contacteur, ou un disjoncteur contacteur. Les liaisons 70 et 71 sont par exemple utilisées par un opérateur local pour être informé sur l'état de l'installation, les données de réglage et/ou les données de calcul du vieillissement d'appareils électriques et pour modifier lesdites données. Un module de communication sans fil 74 est connecté à un concentrateur 8 pour communiquer par exemple avec le superviseur ou avec d'autres parties de l'installation. Ainsi, la signalisation du vieillissement d'appareils électriques peut être faite aussi sur des ordinateurs portables 76, des tablettes en liaisons sans fil 70 ou sur des téléphones portables 77 ou tablette par réseau de téléphonies cellulaire 71.

Sur la figure 5, des parties d'installation 59A et 59B sont par exemple dans un même local. Ainsi, certaines liaisons 70, 71 et modules 74 peuvent êtres mutualisés dans le même local 78. Les liaisons 72 avec les boitiers de télécommande sont associées à chaque module de traitement 1. Dans un autre local 79, une autre partie d'une installation 59C est connectée au superviseur et aux parties 59A, 59B à travers le réseau de communication 56.

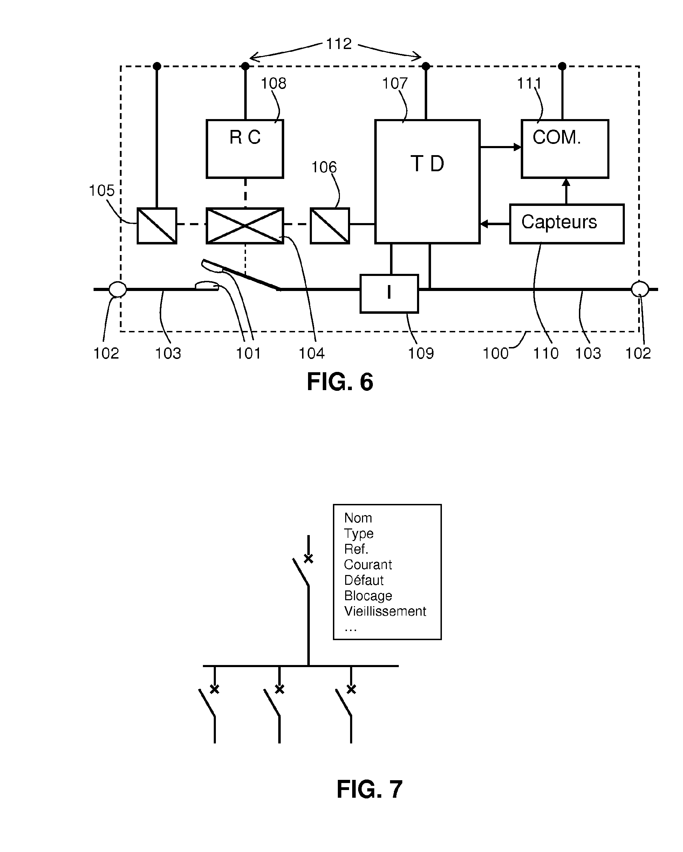

La figure 6 montre un schéma d'un appareil électrique tel qu'un disjoncteur 100 destiné à être utilisé avec un dispositif de contrôle de vieillissement selon un mode de réalisation de l'invention. Le disjoncteur comporte des contacts de puissance 101 reliés à des bornes 102 de raccordement par des conducteurs de puissance 103. Les contacts 101 sont actionnés par un mécanisme 104 pouvant être commandé manuellement ou par les dispositifs de commande. Dans le disjoncteur de la figure 6 le mécanisme 104 est commandé par un actionneur 105 tel qu'une bobine à maximum de tension et/ou à manque de tension, par un relais de déclenchement 106 associé à un déclencheur 107, ou par un dispositif de télécommande 108 capable d'ouvrir ou de fermer les contacts 101. Le déclencheur électronique 107 reçoit des signaux représentatifs de courants circulant dans les conducteurs 103 et mesurés par les capteurs de courants 109. D'autres capteurs 110 sont connectés au déclencheur 107 pour fournir des informations telles que la température locale. Le disjoncteur comprend aussi un module de communication 111 connecté au déclencheur et/ou à des capteurs pour fournir au module 1 des informations pour le calcul de vieillissement. Des bornes 112 permettent le raccordement de certains éléments du disjoncteur.

La figure 7 représente un schéma de présentation des données d'appareils électriques montrant des informations de vieillissement. Ce type de schéma peut apparaitre sur des outils de contrôle et de diagnostic 57, 76, 77.

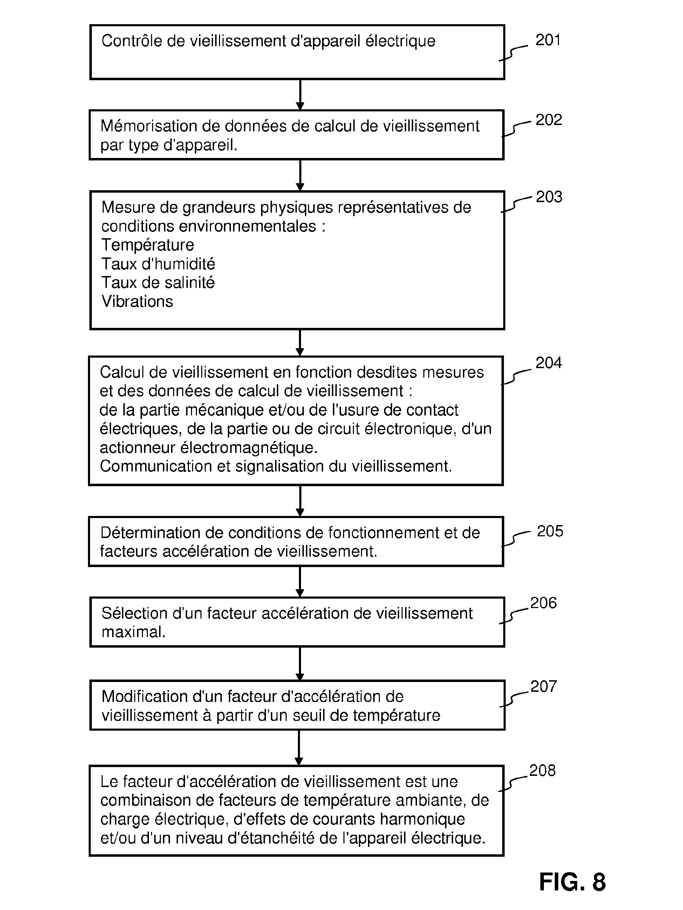

La figure 8 représente un organigramme d'un procédé de contrôle du vieillissement d'appareils électriques selon un mode de réalisation de l'invention.

L'étape 201 initialise le contrôle du vieillissement des appareils électriques. Elle mémorise notamment les caractéristiques de chaque type ou référence d'appareils électriques pouvant être utilisés dans l'installation. L'étape 202 effectue la mémorisation de données de calcul de vieillissement par type d'appareil. Le schéma est entré sous forme unifilaire en définissant les points de connexion en amont et en aval ainsi que les références de chaque appareil et des réglages. Le schéma peut être entré par des outils graphiques ou importé depuis d'autres logiciels.

Une étape 203 effectue la mesure et l'enregistrement de grandeurs physiques représentatives de conditions environnementales. L'étape 203 comprend notamment :

- la mesure et la mémorisation de température par un capteur proche desdits appareils électriques,
- la mesure et la mémorisation de taux d'humidité,
- la mesure et la mémorisation de taux de salinité, et/ou
- la mesure et la mémorisation d'amplitude et de fréquence de vibrations.

Une étape 204 effectue le calcul de vieillissement en fonction desdites mesures et des données de calcul de vieillissement mémorisées. Dans cette étape le calcul de vieillissement comprend :

- le calcul de vieillissement de la partie mécanique et/ou de l'usure de contact électriques dudit appareil,
- le calcul de vieillissement de la partie la partie électronique dudit appareil, et/ou
- le calcul de vieillissement d'un actionneur électromagnétique dudit appareil électrique.

A la fin du calcul il y a la communication et/ou la signalisation d'informations représentatives de résultats du calcul de vieillissement des appareils électriques.
Une étape 205 détermine des conditions de fonctionnement notamment en effectuant :

- le comptage de manoeuvres d'un appareil électrique,
- la mesure de conditions de manoeuvres de l'appareil électrique, et
- l'enregistrement de données représentatives de manoeuvres associées à des valeurs de courant coupé.

L'étape 205 effectue aussi la détermination ou le calcul de facteurs d'accélération de vieillissement. Une étape 206 sélectionne un facteur accélération de vieillissement maximal parmi plusieurs facteurs accélération de vieillissement. L'étape 206 permet de tenir compte d'une certaine indépendance des facteurs d'accélération du vieillissement. Il est aussi possible de pondérer plusieurs facteurs d'accélération en un facteur commun.
A une étape 207, le procédé modifie une valeur du facteur d'accélération de vieillissement dû à la température à partir d'un seuil de température. Par exemple, à partir de 85°C un circuit électronique peut avoir un facteur d'accélération de vieillissement beaucoup plus élevé.
Une étape 208 attribue au facteur d'accélération de vieillissement dû à la température une combinaison de facteurs d'accélération de vieillissement tels que la température ambiante, le type de charge électrique, les effets de courants harmoniques et/ou l'indice de protection (IP) dudit appareil électrique.
Dans les installations décrites ci-dessus les liaisons entre les appareils sont décrites avec un réseau filaire et des concentrateurs. Ces liaisons filaires sont de préférence avec le standard de communication industriel "MODBUS". Cependant, d'autres standards peuvent être utilisés. Les liaisons peuvent aussi être des liaisons sans fils de types bien connus sous les noms de "WI-FI" ou "ZigBee"

## Revendications

1. Procédé de contrôle de vieillissement d'au moins un appareil électrique **caractérisé en ce qu'il** comporte :

   - l'entrée et la mémorisation (202) de données de calcul de vieillissement par type d'appareil,
   - la mesure (203) de grandeurs physiques représentatives de conditions environnementales,
   - le calcul (204) de vieillissement en fonction desdites mesures et des données de calcul de vieillissement mémorisées, et
   - la communication (204) et/ou la signalisation d'informations de vieillissement d'appareils électriques.

2. Procédé de contrôle selon la revendication 1 **caractérisé en ce qu'il** comporte des conditions (205) fonctionnelles comprenant :

   - le comptage de manoeuvres dudit appareil électrique,
   - la mesure de conditions de manoeuvres dudit appareil électrique, et

- l'enregistrement de données représentatives de manoeuvres associées à des valeurs de courant coupé.

3. Procédé de contrôle selon l'une des revendications 1 ou 2 **caractérisé en ce que** la mesure (203) de grandeurs physiques représentatives de conditions environnementales comprend :

- la mesure et la mémorisation de température par un capteur proche desdits appareils électriques,
- la mesure et la mémorisation de taux d'humidité,
- la mesure et la mémorisation de taux de salinité, et/ou
- la mesure et la mémorisation d'amplitude et de fréquence de vibrations,

4. Procédé de contrôle selon l'une quelconque des revendications 1 à 3 **caractérisé en ce que** le calcul de vieillissement comprend :

- le calcul (204) de vieillissement de la partie mécanique et/ou de l'usure de contacts électriques dudit appareil,
- le calcul (204) de vieillissement de la partie électronique dudit appareil, et/ou
- le calcul (204) de vieillissement d'un actionneur électromagnétique dudit appareil électrique.

5. Procédé de contrôle selon l'une quelconque des revendications 1 à 4 **caractérisé en ce qu'il** comprend la détermination (205) de facteurs accélération de vieillissement.

6. Procédé de contrôle selon la revendication 5 **caractérisé en ce qu'il** comporte la sélection (206) d'un facteur accélération de vieillissement maximal parmi plusieurs facteurs accélération de vieillissement.

7. Procédé de contrôle selon l'une des revendications 5 ou 6 **caractérisé en ce qu'il** comporte la modification (207) d'une valeur du facteur d'accélération de vieillissement dû à la température à partir d'un seuil de température.

8. Procédé de contrôle selon l'une quelconque des revendications 1 à 3 **caractérisé en ce qu'il** comporte la combinaison (208) d'un facteur d'accélération de vieillissement dû à la température avec des facteurs accélération de vieillissement représentatifs d'une température ambiante, d'une charge électrique, d'effets de courants harmoniques et/ou d'un indice de protection dudit appareil électrique.

9. Dispositif de contrôle de vieillissement d'au moins un appareil électrique comportant des moyens de traitement (1, 33, 34) et des moyens (7, 8, 9) de communication destinés à être connectés à au moins un appareil électrique **caractérisé en ce que** les moyens de traitement comportent des moyens pour mettre en oeuvre un procédé selon l'une quelconque des revendications 1 à 8.

10. Dispositif de contrôle selon la revendication 9 **caractérisé en ce que** lesdits moyens de traitement comportent :

- des moyens (3) de stockage de caractéristiques de calcul de vieillissement d'appareils électriques,
- des entrées de mesure destinées à être connectées à des capteurs (20-26) de mesure de grandeurs physiques environnementales,
- des moyens (1, 59) d'indication de vieillissement d'appareils électriques, et
- des moyens (4-9, 61) de communication.

11. Dispositif de contrôle selon l'une des revendications 9 ou 10 **caractérisé en ce qu'il** comporte des capteurs (20-26) de mesure de grandeurs physiques environnementales connectés auxdits moyens de traitement.

12. Dispositif de contrôle selon l'une quelconque des revendications 9 à 11 **caractérisé en ce que** des capteurs de mesure de grandeurs physiques environnementales comprennent :

- un capteur (20) de température situé dans un espace proche desdits appareils électriques,
- un capteur (22) de taux d'humidité,
- un capteur (23) de taux de salinité, et/ou
- un capteur (21) d'amplitude et de fréquence de vibrations.

13. Installation électrique comportant un contrôle de vieillissement d'au moins un appareil électrique comportant des moyens de traitement (1, 33, 34, 45, 55) et des moyens (3, 8, 56, 57) de communication destinés à être connectés à un appareil électrique (10-14, 38, 38, 41, 49, 50, 52) **caractérisé en ce que** les moyens de traitement comportent des moyens pour mettre en oeuvre un procédé selon l'une quelconque des revendications 1 à 8.

**14.** Installation électrique selon la revendication 14 comportant des appareils électriques (10-14, 38, 38, 41, 49, 50, 52) **caractérisé en ce qu'**elle comporte au moins un dispositif (1, 33, 34, 45, 55) selon l'une quelconque des revendications 9 à 12 connecté par des moyens de communication (3, 8, 56, 57) auxdits appareils électriques pour recevoir des données de fonctionnement.

**FIG. 1**

**FIG. 2**

FIG. 3

FIG. 4

**FIG. 5**

**FIG. 6**

**FIG. 7**

| Contrôle de vieillissement d'appareil électrique | 201 |

↓

| Mémorisation de données de calcul de vieillissement par type d'appareil. | 202 |

↓

| Mesure de grandeurs physiques représentatives de conditions environnementales :<br>Température<br>Taux d'humidité<br>Taux de salinité<br>Vibrations | 203 |

↓

| Calcul de vieillissement en fonction desdites mesures et des données de calcul de vieillissement :<br>de la partie mécanique et/ou de l'usure de contact électriques, de la partie ou de circuit électronique, d'un actionneur électromagnétique.<br>Communication et signalisation du vieillissement. | 204 |

↓

| Détermination de conditions de fonctionnement et de facteurs accélération de vieillissement. | 205 |

↓

| Sélection d'un facteur accélération de vieillissement maximal. | 206 |

↓

| Modification d'un facteur d'accélération de vieillissement à partir d'un seuil de température | 207 |

↓

| Le facteur d'accélération de vieillissement est une combinaison de facteurs de température ambiante, de charge électrique, d'effets de courants harmonique et/ou d'un niveau d'étanchéité de l'appareil électrique. | 208 |

**FIG. 8**

Europäisches
Patentamt

European
Patent Office

Office européen
des brevets

**RAPPORT DE RECHERCHE EUROPEENNE**

Numéro de la demande

EP 13 30 5162

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 117 022 A2 (SHARP KK [JP]) 18 juillet 2001 (2001-07-18) * le document en entier * | 1-14 | INV. G05B19/4065 |
| X | US 2005/143956 A1 (LONG WAYNE R [US] ET AL) 30 juin 2005 (2005-06-30) * alinéas [0002], [0077] * | 1 | |
| X | US 6 490 543 B1 (JAW LINK C [US]) 3 décembre 2002 (2002-12-03) * colonne 1, ligne 1 - colonne 4, ligne 18 * | 1 | |
| X | US 2010/082267 A1 (SCHIMERT JAMES [US] ET AL) 1 avril 2010 (2010-04-01) * alinéa [0001] - alinéa [0012] * * alinéa [0029] - alinéa [0035]; figure 2 * | 1 | |

DOMAINES TECHNIQUES
RECHERCHES (IPC)

G05B

Le présent rapport a été établi pour toutes les revendications

| Lieu de la recherche | Date d'achèvement de la recherche | Examinateur |
|---|---|---|
| La Haye | 19 juin 2013 | José Luis Meseguer |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 30 5162

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-06-2013

| Document brevet cité au rapport de recherche | | Date de publication | Membre(s) de la famille de brevet(s) | | Date de publication |
|---|---|---|---|---|---|
| EP 1117022 | A2 | 18-07-2001 | EP | 1117022 A2 | 18-07-2001 |
| | | | JP | 2001195448 A | 19-07-2001 |
| | | | US | 2001007971 A1 | 12-07-2001 |
| US 2005143956 | A1 | 30-06-2005 | AU | 2004281482 A1 | 28-04-2005 |
| | | | BR | PI0415352 A | 12-12-2006 |
| | | | CA | 2540336 A1 | 28-04-2005 |
| | | | EA | 200600784 A1 | 27-02-2007 |
| | | | EP | 1673722 A2 | 28-06-2006 |
| | | | HK | 1099106 A1 | 07-12-2012 |
| | | | KR | 20060105748 A | 11-10-2006 |
| | | | US | 2005143956 A1 | 30-06-2005 |
| | | | WO | 2005038613 A2 | 28-04-2005 |
| US 6490543 | B1 | 03-12-2002 | AUCUN | | |
| US 2010082267 | A1 | 01-04-2010 | AUCUN | | |

EPO FORM P0460

Pour tout renseignement concernant cette annexe : voir Journal Officiel de l'Office européen des brevets, No.12/82